# FASCICULE DE BREVET EUROPEEN

(11) **EP 1 713 655 B1**
(45) Date de publication et mention de la délivrance du brevet: **07.10.2009**
(21) Numéro de dépôt: 05717703.2
(22) Date de dépôt: 03.02.2005
(51) Int. Cl.: B60J 5/10, E05B 15/02, E05B 65/16

(54) **Véhicule avec dispositif de verrouillage pour deux ouvrants**
Kraftfahrzeug mit Verriegelungseinrichtung für zwei Öffnungsflügel
Vehicle with locking device for two wings

(30) Priorité: 03.02.2004 FR 0450195
(43) Date de publication de la demande: 25.10.2006
(73) Titulaire: RENAULT S.A.S., 92100 Boulogne Billancourt (FR)
(72) Inventeur: GUIHENEUF, Fabien, F-92500 Rueil Malmaison (FR)
(86) Numéro de dépôt international: PCT/FR2005/050066
(87) Numéro de publication internationale: WO 2005/075228

(56) Documents cités:
- DE-U- 9 308 635
- FR-A- 2 706 936
- US-A- 3 612 601
- US-A- 4 722 206
- US-A- 4 998 759

## Description

La présente invention se rapporte à un véhicule comportant une carrosserie, un premier ouvrant monté à mobilité par rapport à la carrosserie et un deuxième ouvrant monté à mobilité par rapport audit premier ouvrant.

Le document FR2706936 montre un véhicule comportant une carrosserie, un premier ouvrant monté à mobilité par rapport à la carrosserie et un deuxième ouvrant monté à mobilité par rapport audit premier ouvrant. Dans un tel véhicule, il faut veiller à optimiser l'utilisation des gâches et serrures afin de ne pas empiéter sur le volume utile du coffre.

Typiquement, une gâche comporte un fil avec un tronçon actif susceptible de coopérer avec un pêne de serrure. En général, la gâche est spécifique à un ouvrant d'un véhicule, en fonction de l'architecture du véhicule, au détriment de l'utilisation d'une même gâche pour plusieurs véhicules ou pour des ouvrants différents d'un même véhicule.

Le but de l'invention est d'améliorer un tel véhicule.

Dans ce but, l'invention propose un véhicule comportant une carrosserie, un premier ouvrant monté à mobilité par rapport à la carrosserie et un deuxième ouvrant monté à mobilité par rapport audit premier ouvrant. Selon l'invention, le véhicule comporte deux gâches sensiblement identiques, chaque gâche comportant un fil de gâche à deux brins saillants vers le haut et fixés sur une platine horizontale. Un premier des deux brins d'une première des gâches comporte un premier tronçon actif, ledit premier tronçon actif dudit premier brin étant adapté à coopérer avec un premier pêne d'une première serrure du premier ouvrant, la première gâche étant montée dans une première position de montage. Un second des deux brins d'une deuxième des gâches comporte un second tronçon actif, le second tronçon actif dudit second brin étant adapté à coopérer avec un deuxième pêne d'une deuxième serrure du deuxième ouvrant, la seconde gâche étant montée dans une deuxième position de montage. Dans la deuxième position de montage, la gâche est décalée de 180 degrés autour d'un axe vertical d'inversion par rapport à la première position. Un premier plan vertical passant par les deux tronçons actifs et un deuxième plan vertical orthogonal au premier plan et passant par l'axe d'inversion, le point de fixation de l'un au moins des brins est décalé par rapport à son tronçon actif en direction du deuxième plan.

Selon l'invention, l'utilisation de la gâche est multiple.

Un premier plan vertical passant par les deux tronçons actifs et un deuxième plan vertical orthogonal au premier plan et passant par l'axe d'inversion, une distance DA peut séparer le deuxième plan du point milieu du premier tronçon actif et une distance DB, différente de DA, peut séparer le deuxième plan du point milieu du second tronçon actif. Dans certains environnements de fixation de la gâche, une telle géométrie de gâche peut en faciliter le montage par un opérateur.

La platine peut comporter deux ailes latérales munies de points de montage sur un véhicule de part et d'autre d'une portion centrale de fixation des brins.

La platine peut comporter au moins une portion saillante de fixation des brins, un premier point de fixation de l'un des brins sur la platine étant décalé verticalement par rapport un deuxième point de fixation de l'autre des brins sur la platine.

L'un au moins des tronçons actifs peut être vertical et rectiligne.

Les tronçons actifs sont reliés entre eux par un tronçon de liaison horizontal.

La gâche peut comporter des moyens de polarisation de son montage dans l'une ou l'autre desdites positions de montage sur un véhicule, pour identification de son sens de montage. Une telle caractéristique permet de minimiser tout risque d'erreur de montage dans la première ou deuxième position.

Dans le véhicule selon l'invention, le premier ouvrant peut être un hayon comportant un cadre monté à pivotement par rapport à un pavillon de la carrosserie selon un axe sensiblement horizontal. Le deuxième ouvrant peut être un abattant monté à pivotement par rapport audit cadre selon un axe sensiblement horizontal. La platine de la première gâche peut être montée sensiblement horizontalement sur l'un d'une traverse inférieure de la carrosserie ou du cadre, la première serrure étant montée sur l'autre de la traverse ou du cadre pour le verrouillage du cadre sur la carrosserie. La deuxième gâche peut être montée sensiblement horizontalement sur une partie de l'un de l'abattant ou du cadre, la deuxième serrure étant montée sur l'autre de l'abattant ou du cadre pour le verrouillage de l'abattant par rapport au cadre.

Dans le véhicule selon l'invention, le premier ouvrant peut être un hayon comportant un cadre monté à mobilité par rapport à la carrosserie du véhicule. Le deuxième ouvrant peut être un abattant monté à mobilité par rapport audit cadre, e la première gâche étant montée sur la carrosserie. La première serrure peut être montée sur le cadre pour le verrouillage du cadre sur la carrosserie. La deuxième gâche peut être montée sur l'abattant, la deuxième serrure étant montée sur le cadre pour le verrouillage de l'abattant par rapport au cadre.

La présente invention va maintenant être décrite par un exemple de réalisation non limitatif, en liaison avec les dessins annexés sur lesquels :
- la figure 1 est une vue schématique en coupe partielle d'un véhicule selon l'invention, comportant un aménagement de gâches,

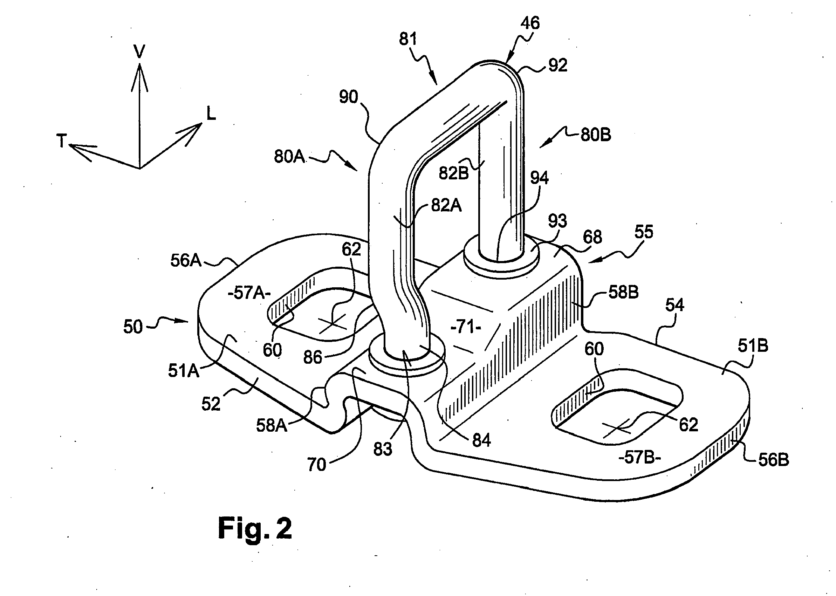

- la figure 2 est une vue en perspective de la gâche selon l'invention,

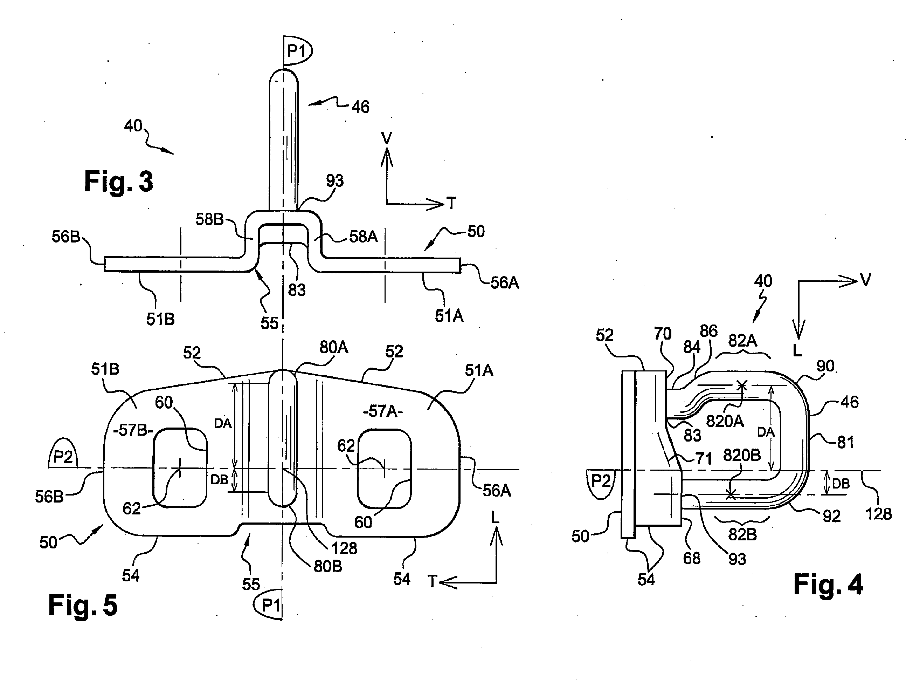

- la figure 3 est une vue de face de la gâche de la figure 1,
- la figure 4 est une vue de côté de la gâche de la figure 2,
- la figure 5 est une vue de dessus de la gâche de la figure 2,
- la figure 6 est une section d'une portion d'un véhicule selon l'invention dans laquelle une gâche est montrée de côté, montée sur une traverse arrière du véhicule,
- la figure 7 est une section d'une portion d'un véhicule selon l'invention dans laquelle une gâche est montrée de côté, montée sur un ouvrant arrière du véhicule.

Dans la description qui va suivre, l'axe L correspond à la direction longitudinale d'avancement du véhicule, orienté de l'arrière vers l'avant, l'axe T correspond à la direction transversale du véhicule, orienté de la gauche vers la droite, l'axe V correspond à la direction verticale du véhicule, orienté du bas vers le haut.

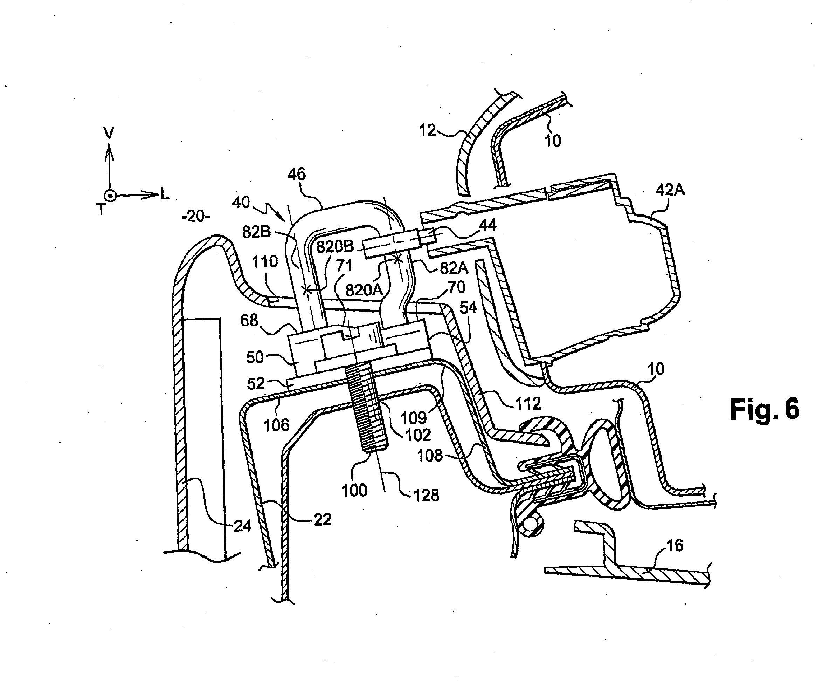

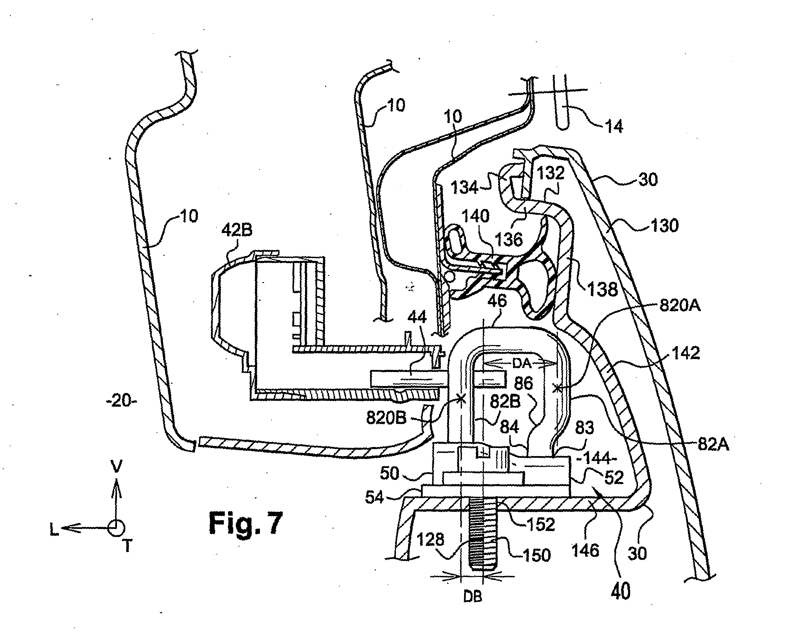

Un certain nombre de véhicules comportent un premier ouvrant arrière sous forme d'un hayon comportant un cadre 10, par exemple en tôle à l'extérieur et habillé d'un habillage intérieur 12 (figure 6). Une lunette arrière 14 est montée en partie haute du hayon (figure 7).

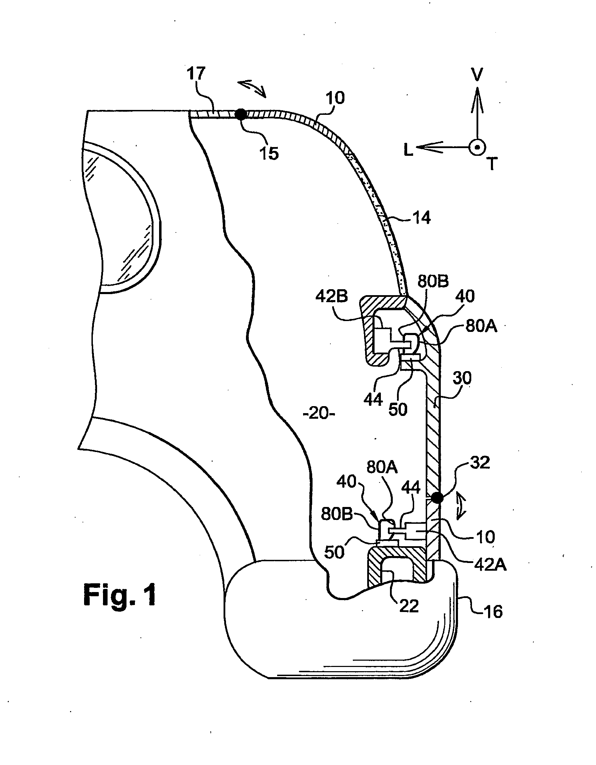

Le cadre 10 est monté à mobilité par rapport à la carrosserie du véhicule (figure 1) pour dégager une ouverture vers l'habitacle, en particulier vers le compartiment à bagages 20. Des charnières supérieures 15 permettent le pivotement du cadre 10 par rapport au pavillon 17 de la carrosserie. Un pare choc arrière 16 du véhicule est situé adjacent à la partie basse du cadre 10, sur la carrosserie du véhicule.

La figure 6 montre la partie basse du hayon et de la carrosserie, en particulier la traverse arrière 22 de la carrosserie, cette dernière étant habillée par un habillage intérieur 24 côté coffre à bagages. Une gâche 40 est montée sur la traverse 22. Une serrure 42A est montée sur une partie horizontale basse du cadre 10, en correspondance de la gâche 40. Un pêne 44 de la serrure 42A est prévu pour coopérer avec la gâche 40 quand le cadre 10 du hayon est fermé sur la carrosserie.

Un deuxième ouvrant, en l'espèce un abattant 30 est montée à mobilité par rapport cadre 10, entre la lunette arrière 14 et le pare choc 16. Des charnières inférieures 32 permettent le pivotement de l'abattant 30 par rapport au cadre 10.

La figure 7 montre, à proximité du bord inférieure de la lunette 14, la partie médiane du hayon, en particulier une partie médiane du cadre 10 et une partie haute de l'abattant 30. Une gâche 40 est montée sur une partie horizontale haute de l'abattant 30. Une serrure 42B est montée sur le cadre 10, en correspondance de la gâche 40, un pêne 44 de la serrure 42B étant prévu pour coopérer avec la gâche 40B quand l'abattant 30 du hayon est fermé sur le cadre 10.

Comme les gâches 40 et serrures 42A, 42B déterminent un certain encombrement selon l'axe L, il est nécessaire que leur dimension selon L ne soit pas trop grande afin de ne pas empiéter sur la capacité de chargement du coffre à bagages 20.

Les gâches 40 sont identiques, au bénéfice de la standardisation des pièces et du coût du véhicule. Chaque gâche 40 comporte un fil de gâche 46 sensiblement en forme du U adapté pour être verrouillé par un pêne de mécanisme de serrure.

Chaque gâche 40 comporte une platine 50 présentant un première aile latérale 51A plane et une deuxième aile latérale 51 B plane, reliées par une arche centrale 55 saillante vers le haut. Les deux ailes 51A et 51B sont parallèles et leurs surfaces inférieures respectives sont sensiblement coplanaires.

Chaque aile 51A et 51B est percée en son centre par un trou 60 de section sensiblement rectangulaire et de centre 62, le centre 62 étant sensiblement au centre de l'aile 51 A et 51 B.

La platine 50 comporte une première tranche de façade 52, une deuxième tranche de façade 54, deux tranches latérales 56A et 56B raccordant les tranches de façade 52 et 54 sur les côtés de la platine.

Chaque première tranche de façade 52 est inclinée du milieu de la platine 50 vers les tranches latérales 56A et 56B. Comme les deuxièmes tranches de façade 54 sont rectilignes et alignées, la largeur de la platine 50 est plus importante vers le milieu de la platine qu'à ses extrémités latérales.

Une face supérieure 57A de l'aile 51A est raccordée à une surface latérale 58A formant le versant d'un montant latéral de l'arche 55. Une face supérieure 57B de l'aile 51B est raccordée à une surface latérale 58G formant le versant d'un montant latéral de l'arche 55. Les surfaces 57A et 57B sont sensiblement coplanaires.

La partie supérieure de l'arche 55 raccordant les montant latéraux de l'arche 55 par l'intermédiaire de congés comporte plusieurs portions. Une portion amont de ladite partie supérieure comporte une surface supérieure 68 située à une première hauteur par rapport aux surfaces 57A et 57B des ailes 51A et 51B de la platine 50. Une portion aval de ladite partie supérieure comporte une surface supérieure 70 située à une deuxième hauteur, au dessous de la première hauteur, par rapport aux surfaces 57A et 57B des ailes 51A et 51 B de la platine 50. Une portion centrale raccorde la portion amont et la portion aval de la partie supérieure de l'arche 55, en formant un talus entre lesdites portions. La surface supérieure 71 de la portion centrale en talus est inclinée du haut vers le bas, du côté première tranche de façade 52 vers le côté deuxième tranche de façade 54.

Des trous traversants, qui débouchent sensiblement au centre des surfaces supérieures amont 68 et aval 70, sont ménagés verticalement dans la portion amont et la portion aval de la partie supérieure de l'arche 55. Les trous traversants sont prévus pour recevoir des tronçons d'extrémité inférieure du fil de gâche 46 pour association du fil de gâche 46 avec la platine 50.

Le fil de gâche 46 comporte un premier brin vertical 80A et un deuxième brin vertical 80B raccordés par un brin horizontal de liaison 81.

Le brin 80A comporte un premier tronçon actif vertical 82A prévu pour coopérer avec le pêne 44 de la serrure 42A pour le verrouillage du cadre 10 sur la traverse 22 de la carrosserie. Le brin 80B comporte un deuxième tronçon actif vertical 82B prévu pour coopérer avec le pêne 44 de la serrure 42B pour le verrouillage de l'abattant 30 par rapport au cadre 10.

Le brin 80A comporte une racine verticale 84 orthogonale à la surface supérieure aval 70 de l'arche centrale 55 de la platine 50. La racine 84 est décalée selon l'axe L par rapport au tronçon actif 82A, vers le brin 80B.

La racine 84 coopère à une première extrémité avec la platine 50 sur laquelle elle est fixée par l'intermédiaire d'un rivet. Un point de fixation 83 de la racine 84 sur la platine 50 est déterminé au niveau de la surface supérieure aval 70 de l'arche 55.

Le brin 80A comporte un tronçon incliné 86 raccordant la racine 84 et le tronçon actif 80A. Le tronçon 84 est incliné vers le brin 80B, du haut vers le bas.

Le brin 80A est raccordé au brin 81 par l'intermédiaire d'un tronçon recourbé 90. Le brin 81 est raccordé au brin 80B par l'intermédiaire d'un tronçon recourbé 92.

Le tronçon actif 82B est raccordé vers le haut au tronçon recourbé 92 et vers le bas à une racine 94 orthogonale à la surface supérieure amont 68 de l'arche centrale 55 de la platine 50. La racine 94 est alignée avec le tronçon actif 82B.

La racine 94 coopère, à l'opposé du tronçon actif 82B, avec la platine 50 sur laquelle elle est fixée par l'intermédiaire d'un rivet. Un point de fixation 93 de la racine 94 sur la platine 50 est déterminé au niveau de la surface supérieure amont 68 de l'arche 55.

Il est à remarquer que la platine 50 comporte deux portion distinctes de fixation des brins 80A et 80B, ces portions étant saillantes à des hauteurs distinctes par rapport aux ailes 51A et 51B, le premier point de fixation 83 du brin 80A étant décalé verticalement par rapport au deuxième point de fixation 93 du brin 80B. Cette disposition est favorable au coût de la gâche 40 car elle permet d'optimiser la longueur de fil de gâche utilisé, la fil de gâche étant plus onéreux que la tôle formant la platine 50, tout en respectant les contraintes d'encombrement et d'architecture imposées par l'environnement de la gâche. Avantageusement, l'arche 55 permet de loger l'extrémité libre du fil de gâche 46 et les rivets de fixation de ce dernier sur la platine 50.

Un plan vertical P1 passe les points milieux 820A et 820B respectifs de tronçons actifs 82A et 82B. Un plan vertical P2 passe par les centres 62 des trous 60. Un axe vertical 128, est situé à l'intersection des plans P1 et P2.

Une distance DA sépare le point milieu 820A de l'axe 128. Une distance DB sépare le point milieu 820B de l'axe 128.

A la figure 6, la gâche 40 est représentée montée dans le véhicule dans un premier environnement. La gâche 40 est montée vissée sur la traverse 22 par l'intermédiaire de deux vis 100 engagées dans des trous filetés 102 ménagés dans la traverse.

La gâche 40 est montée dans une première position de montage par rapport à la serrure 42A. Dans cette position de montage, le tronçon actif 82A est situé vers l'arrière, la serrure 42A étant montée dans le cadre, vers l'arrière par rapport à la gâche 40. Le pêne 44 de la serrure 42A est verrouillé sur le tronçon actif 82A quand le cadre 10 est fermé.

Ici, la traverse 22 comporte une paroi supérieure 106 sur laquelle reposent les ailes 51A et 518, les vis 102 passant à travers les trous de fixation 60. Comme les trous 60 sont oblongs, un ajustement de la position de la platine 50 par rapport aux trous 102 est possible afin de tenir compte des dispersions dimensionnelles de la carrosserie et du cadre 10 du hayon.

La paroi supérieure 106 est inclinée d'environ 10 degrés vers l'avant et vers le bas. La paroi arrière 108 de la traverse 22 est perpendiculaire à la paroi 106, en étant raccordée à cette dernière par l'intermédiaire d'un congé 109.

L'habillage 24 recouvre la traverse 22, un orifice 110 dans la paroi supérieure de l'habillage ménageant un passage pour la gâche 40. La paroi arrière 112 de l'habillage 24 est parallèle à la paroi arrière 108 de la traverse 22, en étant accolée à cette dernière.

La première tranche de façade 54 de la platine est située le plus en arrière possible par rapport au congé 109 de la traverse 22, tout en évitant que la platine 50 soit en porte à faux par rapport au congé 109. De plus, selon l'invention, le tronçon actif 80A étant décalé vers l'arrière par rapport à son point de fixation 83, le tronçon actif 80A est déporté vers l'arrière, permettant d'optimiser l'encombrement de la serrure 42A avec son pêne 44. L'optimisation de l'encombrement de la serrure 42A avec son pêne 44 est d'autant avantageuse que la présence d'un jeu est nécessaire au niveau de la serrure 42A, entre l'habillage 12 du cadre 10 et l'habillage 24 de la traverse 22. Plus l'encombrement est faible, meilleure est la capacité de compartiment à bagages. La forme de la platine 50 et du fil de gâche 46 permet avantageusement d'être adaptée à l'architecture du véhicule à proximité de la gâche 40 et de la serrure 42A.

A la figure 7, la gâche 40 est représentée montée dans le véhicule dans un second environnement. L'abattant 30 est représenté ici en position fermée sur le cadre 10, la gâche 40 coopérant avec le pêne 44 de la serrure 42B. La gâche 40 est montée vissée sur une portion située sur une partie haute de l'abattant 30. La serrure 42B est montée sur le cadre 10 est dessous du niveau de la lunette arrière 14.

La gâche 40 est montée dans une deuxième position de montage par rapport à la serrure 42B. Dans cette position de montage, le tronçon actif 82A est aussi situé vers l'arrière. Ici, la serrure 42B est montée dans le cadre 10, vers l'arrière par rapport à la gâche 40. Ici, le pêne 44 de la serrure 42B est verrouillé sur le tronçon actif 82B, situé vers l'avant.

En prenant pour référentiel les serrures 42A et 42B, dans la seconde position de montage (figure 7) la gâche 40 est décalée de 180 degrés autour d'un axe vertical 128 d'inversion par rapport à la première position de montage (figure 6).

La distance DA est représentative du montage de la gâche 40 par rapport à la serrure 42A, en particulier de l'encombrement selon L de l'ensemble gâche et serrure dans la première position de montage. La distance DB est représentative du montage de la gâche 40 par rapport à la serrure 42B, en particulier de l'encombrement selon L de l'ensemble gâche et serrure dans la seconde position de montage. La gâche selon l'invention est intéressante car elle permet, d'adapter la distance entre les centres 62 des trous 60 de fixation et le milieu du tronçon actif 82A ou 82B utilisé dans la position de montage choisie en fonction de l'architecture du véhicule.

L'abattant 30 comporte une peau externe 130 en tôle, convexe à l'extérieur vers l'arrière, du haut vers le bas. L'abattant 30 comporte une peau intérieure 132 en tôle. Tel qu'illustré à la figure 7, les peaux 130 et 132 sont raccordées à leur extrémité supérieure, à proximité de la lunette arrière 14.

Une première portion supérieure transversale 134 de la peau 132, raccordée à la peau 130, est sensiblement verticale. Une deuxième portion transversale 136 de la peau 132, raccordée à la portion 134, est horizontale, en retrait vers l'arrière par rapport à la portion 134. Une troisième portion transversale 138 de la peau 132, raccordée à la portion 136 vers le bas, est verticale. La portion 138 sert à l'appui d'un joint d'étanchéité 140 placé sous la lunette 14, entre le cadre 10 et l'abattant 30.

Une quatrième portion transversale 142 de la peau 132, raccordée à la portion 138 vers le bas, est recourbé vers l'arrière, de façon à ce que sa surface arrière soit convexe à l'arrière vers l'extérieur pour que la peau 132 s'ajuste au profil de la peau externe 130, au bénéfice de la capacité du coffre à bagages. La surface avant de la portion 138 est concave de façon à ménager une cavité 144 de réception de la gâche 40.

Une cinquième portion transversale 146 de la peau 132, raccordée à la portion 142 vers le bas et vers l'avant, est sensiblement horizontale, en saillie vers l'avant par rapport à la première portion supérieure 134. Une sixième portion transversale de la peau 132, raccordée à la cinquième portion 146 vers le bas et vers l'avant, est sensiblement verticale, en avant par rapport au niveau de la première portion supérieure 134.

La platine 50 de la gâche 40 est montée sur la surface supérieure de la cinquième portion 146, sur laquelle reposent les ailes 51A et 51B. Des vis 150 passent à travers les trous de fixation 60 de la platine 50. Comme les trous 60 sont oblongs, un ajustement de la position de la platine 50 par rapport à des trous 152 de la portion 146 est possible afin de tenir compte des dispersions dimensionnelles du cadre 10 du hayon et de l'abattant 30.

Compte tenu de l'environnement de la gâche 40, afin de ne pas trop empiéter dans le volume de chargement du compartiment à bagages 20, l'encombrement de la gâche 40 et de la serrure 42B selon l'axe L doit être minimum. La présence de la cavité 144 permet d'optimiser l'encombrement selon l'axe L de la gâche 40 dans l'abattant, une partie de la gâche 40 étant en retrait vers l'arrière par rapport à la portion 134 de la peau intérieure 132. Le montage de la gâche en retrait par rapport à la portion 134 est par contre défavorable à l'accès par une visseuse pour le vissage des vis 150. Afin de minimiser cet inconvénient, les trous 60 sont décalés vers la deuxième tranche de façade 54, c'est à dire ici décalés vers l'avant par rapport au plan P2.

Avantageusement, selon l'invention telle que décrite à travers l'exemple de réalisation non limitatif représenté sur les figures, le premier brin 80A d'une première gâche 40 est adapté à coopérer avec un premier pêne 44 d'une première serrure 42A d'un premier ouvrant, ici le cadre 10 du hayon, la première gâche 40 étant montée sur la traverse 22 dans une première position de montage par rapport à la première serrure 42A fixée sur le cadre 10. Le deuxième brin 80B d'une deuxième gâche 40 est adapté à coopérer avec un deuxième pêne 44 d'une deuxième serrure 42B d'un deuxième ouvrant, ici l'abattant 30, la seconde gâche 40 étant montée sur l'abattant dans une deuxième position de montage par rapport à la deuxième serrure 42B fixée sur le cadre 10.

Pour effectuer la fixation de la gâche 40, le décalage des trous 60 par rapport au plan P2 nécessite à l'opérateur de disposer de moyens de polarisation de montage de la gâche dans l'une ou l'autre desdites positions. Ici, la forme de la platine, en particulier l'inclinaison des premières tranches de façade 52 par rapport aux deuxièmes tranches de façade 54, permet la polarisation de montage et l'identification du sens de montage.

Dans l'exemple décrit, le premier ouvrant du véhicule est un hayon comportant un cadre 10 monté à mobilité par rapport à la carrosserie du véhicule et le deuxième ouvrant est un abattant 30 monté à mobilité par rapport audit cadre. La première gâche est montée sur la carrosserie et la première serrure 42A sur le cadre 10 pour le verrouillage du cadre sur la carrosserie. La deuxième gâche 40 est montée sur l'abattant 30 et la seconde serrure 42B sur le cadre 10 pour le verrouillage de l'abattant 30 par rapport au cadre 10. Selon l'invention, l'inversion mécanique est possible, à savoir qu'une gâche ou une serrure peut être montée indifféremment sur la carrosserie, le cadre ou l'abattant.

## Revendications

1. Véhicule comportant une carrosserie, un premier ouvrant monté à mobilité par rapport à la carrosserie et un deuxième ouvrant monté à mobilité par rapport audit premier ouvrant, **caractérisé en ce qu'**il comporte deux gâches (40) sensiblement identiques, chaque gâche (40) comportant un fil de gâche (46) à deux brins (80A, 80B) saillants vers le haut et fixés sur une platine (50) horizontale, **en ce qu'**un premier (80A) des deux brins d'une première des gâches (40) comporte un premier tronçon actif (82A), ledit premier tronçon actif (82A) dudit premier brin (80A) étant adapté à coopérer avec un premier pêne (44) d'une première serrure (42A) du premier ouvrant, la première gâche (40) étant montée dans une première position de montage, **en ce que** un second (80B) des deux brins d'une deuxième des gâches (40) comporte un second tronçon actif (82B), le second tronçon actif (82B) dudit second brin (80B) étant adapté à coopérer avec un deuxième pêne (44) d'une deuxième serrure (42B) du deuxième ouvrant, la seconde gâche (40) étant montée dans une deuxième position de montage, **en ce que** dans la deuxième position de montage, la gâche (40) est décalée de 180 degrés autour d'un axe vertical d'inversion (128) par rapport à la première position et **en ce qu'**un premier plan vertical (P1) passant par les deux tronçons actifs (82A, 82B) et un deuxième plan vertical (P2) orthogonal au premier plan (P1) et passant par l'axe d'inversion (128), le point de fixation (83) de l'un au moins des brins (80A, 80B) est décalé par rapport à son tronçon actif (82A) en direction du deuxième plan (P2).

2. Véhicule selon la revendication précédente, **caractérisé en ce qu'**un premier plan vertical (P1) passant par les deux tronçons actifs (82A, 828) et un deuxième plan vertical (P2) orthogonal au premier plan (P1) et passant par l'axe d'inversion (128), une distance DA sépare le deuxième plan (P2) du point milieu (820A) du premier tronçon actif (82A) et une distance DB, différente de DA, sépare le deuxième plan (P2) du point milieu (820B) du second tronçon actif (82B).

3. Véhicule selon l'une quelconque des revendications précédentes, **caractérisé en ce que** la platine (50) comporte deux ailes latérales (51A, 51 B) munies de points de montage (60, 62) sur un véhicule de part et d'autre d'une portion centrale (55) de fixation des brins (80A, 80B).

4. Véhicule selon l'une quelconque des revendications précédentes, **caractérisé en ce que** la platine (50) comporte au moins une portion saillante de fixation des brins (80A, 80B), un premier point de fixation (83) de l'un (80A) des brins sur la platine étant décalé verticalement par rapport un deuxième point de fixation (93) de l'autre (80B) des brins sur la platine.

5. Véhicule selon l'une quelconque des revendications précédentes, **caractérisé en ce que** l'un au moins des tronçons actifs (82A, 82B) est vertical et rectiligne.

6. Véhicule selon l'une quelconque des revendications précédentes, **caractérisé en ce que** les tronçons actifs (82A, 82B) sont reliés entre eux par un tronçon de liaison (81) horizontal.

7. Véhicule selon l'une quelconque des revendications précédentes, **caractérisé en ce que** chaque gâche (40) comporte des moyens de polarisation de son montage dans l'une ou l'autre desdites positions de montage sur un véhicule, pour identification de son sens de montage.

8. Véhicule selon l'une quelconque des revendications précédentes, **caractérisé en ce que** le premier ouvrant est un hayon comportant un cadre (10) monté à pivotement par rapport à un pavillon (17) de la carrosserie selon un axe sensiblement horizontal, **en ce que** le deuxième ouvrant est un abattant (30) monté à pivotement par rapport audit cadre selon un axe sensiblement horizontal, **en ce que** la platine (50) de la première gâche (40) est montée sensiblement horizontalement sur l'un d'une traverse inférieure (22) de la carrosserie ou du cadre (10), **en ce que** la première serrure (42A) est montée sur l'autre de la traverse (22) ou du cadre (10) pour le verrouillage du cadre sur la carrosserie, **en ce que** la deuxième gâche (40) est montée sensiblement horizontalement sur une partie de l'un de l'abattant (30) ou du cadre (10) et **en ce que** la deuxième serrure (42B) est montée sur l'autre de l'abattant (30) ou du cadre (10) pour le verrouillage de l'abattant par rapport au cadre.

9. Véhicule selon l'une quelconque des revendications précédentes, **caractérisé en ce que** le premier ouvrant est un hayon comportant un cadre (10) monté à mobilité par rapport à la carrosserie (17, 22) du véhicule, **en ce que** le deuxième ouvrant est un abattant (30) monté à mobilité par rapport audit cadre (10), **en ce que** la première gâche (40) est montée sur la carrosserie (17, 22), **en ce que** la première serrure (42A) est montée sur le cadre (10) pour le verrouillage du cadre sur la carrosserie, **en ce que** la deuxième gâche (40) est montée sur l'abattant (30) et **en ce que** la deuxième serrure (42B) est montée sur le cadre (10) pour le verrouillage de l'abattant par rapport au cadre.

## Claims

1. Vehicle comprising a body, a first opening panel mounted moveably relative to the body, and a second opening panel mounted moveably relative to said first opening panel, **characterized in that** it comprises two substantially identical strikes (40), each strike (40) comprising a strike wire (46) having two upwardly projecting lengths (80A, 80B) fixed to a horizontal plate (50), **in that** a first one (80A) of the two lengths of a first one of the strikes (40) comprises a first active section (82A), said first active section (82A) of said first length (80A) being able to engage with a first bolt (44) belonging to a first lock (42A) of the first opening panel, and the first strike (40) being mounted in a first mounting position, **in that** a second one (80B) of the two lengths of a second one of the strikes (40) comprises a second active section (82B), the second active section (82B) of said second length (80B) being able to engage with a second bolt (44) belonging to a second lock (42B) of the second opening panel, and the second strike (40) being mounted in a second mounting position, **in that** in the second mounting position the strike (40) is rotated through 180 degrees about a vertical axis of inversion (128) relative to the first position, and **in that** with a first vertical plane (P1) passing through the two active sections (82A, 82B) and a second vertical plane (P2) orthogonal to the first plane (P1) and passing through the axis of inversion (128), the fixing point (83) of at least one of the lengths (80A, 80B) is offset relative to its active section (82A) toward the second plane (P2).

2. Vehicle according to the preceding claim, **characterized in that** with a first vertical plane (P1) passing through the two active sections (82A, 82B) and a second vertical plane (P2) orthogonal to the first plane (P1) and passing through the axis of inversion (128), a distance DA separates the second plane (P2) from the midpoint (820A) of the first active section (82A) and a distance (DB), not equal to DA, separates the second plane (P2) from the midpoint (820B) of the second active section (82B).

3. Vehicle according to either of the preceding claims, **characterized in that** the plate (50) comprises two lateral wings (51A, 51B) provided with points (60, 62) for mounting it on a vehicle on either side of a central portion (55) to which the lengths (80A, 80B) are fixed.

4. Vehicle according to any one of the preceding claims, **characterized in that** the plate (50) comprises at least one projecting portion for the attachment of the lengths (80A, 80B), a first fixing point (83) for the attachment of one (80A) of the lengths to the plate being offset vertically relative to a second fixing point (93) for the attachment of the other (80B) of the lengths to the plate.

5. Vehicle according to any one of the preceding claims, **characterized in that** at least one of the active sections (82A, 82B) is vertical and straight.

6. Vehicle according to any one of the preceding claims, **characterized in that** the active sections (82A, 82B) are joined together by a horizontal connecting section (81).

7. Vehicle according to any one of the preceding claims, **characterized in that** each strike (40) comprises mounting polarizing means for its installation in one or other of said mounting positions of a vehicle, to identify the direction in which it should be mounted.

8. Vehicle according to any one of the preceding claims, **characterized in that** the first opening panel is a tailgate comprising a frame (10) mounted so as to pivot relative to a roof (17) belonging to the body about an effectively horizontal axis, **in that** the second opening panel is a leaf (30) mounted so as to pivot relative to said frame about an effectively horizontal axis, **in that** the plate (50) of the first strike (40) is mounted effectively horizontally either on a lower crossmember (22) of the body or on the frame (10), **in that** the first lock (42A) is mounted on whichever is the other of the crossmember (22) and frame (10) to lock the frame to the body, **in that** the second strike (40) is mounted effectively horizontally on part of either the leaf (30) or the frame (10), and **in that** the second lock (42B) is mounted on whichever is the other of the leaf (30) and frame (10) to lock the leaf relative to the frame.

9. Vehicle according to any one of the preceding claims, **characterized in that** the first opening panel is a tailgate comprising a frame (10) mounted moveably relative to the body (17, 22) of the vehicle, **in that** the second opening panel is a leaf (30) mounted moveably relative to said frame (10), **in that** the first strike (40) is mounted on the body (17, 22), **in that** the first lock (42A) is mounted on the frame (10) to lock the frame to the body, **in that** the second strike (40) is mounted on the leaf (30), and **in that** the second lock (42B) is mounted on the frame (10) to lock the leaf relative to the frame.

## Patentansprüche

1. Kraftfahrzeug, das eine Karosserie, ein erstes Öffnungsteil, das beweglich bezüglich der Karosserie angebracht ist, und ein zweites Öffnungsteil, das beweglich bezüglich des ersten Öffnungsteils angebracht ist, umfasst, **dadurch gekennzeichnet, dass** es zwei im Wesentlichen identische Schließplatten (40) aufweist, wobei jede Schließplatte (40) einen Drahtschließbügel (46) mit zwei Längen (80A, 80B) aufweist, die nach oben vorragen und auf einer horizontalen Grundplatte (50) befestigt sind, und dass eine erste (80A) der beiden Längen einer ersten der Schließplatten (40) einen ersten aktiven Abschnitt (82A) aufweist, wobei der erste aktive Abschnitt (82A) der ersten Länge (80A) dazu ausgeführt ist, mit einem ersten Riegel (44) eines ersten Schlosses (42A) des ersten Öffnungsteils zusammenzuwirken, wobei die erste Schließplatte (40) in einer ersten Befestigungsposition angebracht ist, und dass eine zweite (80B) der beiden Längen einer zweiten der Schließplatten (40) einen zweiten aktiven Abschnitt (82B) aufweist, wobei der zweite aktive Abschnitt (82B) der zweiten Länge (80B) dazu ausgeführt ist, mit einem zweiten Riegel (44) eines zweiten Schlosses (42B) des zweiten Öffnungsteils zusammenzuwirken, wobei die zweite Schließplatte (40) in einer zweiten Befestigungsposition angebracht ist, dass in der zweiten Befestigungsposition die Schließplatte (40) um 180 Grad um eine vertikale Inversionsachse (128) bezüglich der ersten Position versetzt ist, und dass mit einer ersten vertikalen Ebene (P1), die durch die beiden aktiven Abschnitte (82A, 82B) verläuft, und einer zweiten vertikalen Ebene (P2), die orthogonal zur ersten Ebene (P1) und durch die Inversionsachse (128) verläuft, der Befestigungspunkt (83) mindestens einer der Längen (80A, 80B) bezüglich seines aktiven Abschnitts (82A) in Richtung der zweiten Ebene (P2) versetzt ist.

2. Fahrzeug nach dem vorhergehenden Anspruch, **dadurch gekennzeichnet, dass** mit einer ersten vertikalen Ebene (P1), die durch die beiden aktiven Abschnitte (82A, 82B) verläuft, und einer zweiten vertikalen Ebene (P2), die orthogonal zur ersten Ebene (P1) und durch die Inversionsachse (128) verläuft, ein Abstand DA die zweite Ebene (P2) von dem Mittelpunkt (820A) des ersten aktiven Abschnitts (82A) trennt und ein Abstand DB, der sich von DA unterscheidet, die zweite Ebene (P2) von dem Mittelpunkt (820B) des zweiten aktiven Abschnitts (82B) trennt.

3. Fahrzeug nach einem der vorhergehenden Ansprüche, **dadurch gekennzeichnet, dass** die Grundplatte (50) zwei Seitenflügel (51A, 51B) aufweist, die mit Punkten (60, 62) zur Befestigung an einem Fahrzeug auf beiden Seiten eines mittleren Teils (55) zur Befestigung der Längen (80A, 80B) versehen sind.

4. Fahrzeug nach einem der vorhergehenden Ansprüche, **dadurch gekennzeichnet, dass** die Grundplatte (50) mindestens einen vorragenden Teil zur Befestigung der Längen (80A, 80B) aufweist, wobei ein erster Befestigungspunkt (83) der einen (80A) der Längen auf der Grundplatte vertikal bezüglich eines zweiten Befestigungspunkts (93) der anderen (80B) der Längen auf der Grundplatte versetzt ist.

5. Fahrzeug nach einem der vorhergehenden Ansprüche, **dadurch gekennzeichnet, dass** mindestens einer der aktiven Abschnitte (82A, 82B) vertikal und geradlinig ist.

6. Fahrzeug nach einem der vorhergehenden Ansprüche, **dadurch gekennzeichnet, dass** die aktiven Abschnitte (82A, 82B) durch einen horizontalen Verbindungsabschnitt (81) miteinander verbunden sind.

7. Fahrzeug nach einem der vorhergehenden Ansprüche, **dadurch gekennzeichnet, dass** jede Schließplatte (40) Polarisierungsmittel für ihre Befestigung in der einen oder der anderen der Positionen zur Befestigung an einem Fahrzeug zur Identifikation ihrer Befestigungsrichtung aufweist.

8. Fahrzeug nach einem der vorhergehenden Ansprüche, **dadurch gekennzeichnet, dass** das erste Öffnungsteil eine Hecktür ist, die einen Rahmen (10) enthält, der schwenkbar bezüglich eines Dachs (17) der Karosserie entlang einer im Wesentlichen horizontalen Achse angebracht ist, dass das zweite Öffnungsteil eine Klappe (30) ist, die schwenkbar bezüglich des Rahmens entlang einer im Wesentlichen horizontalen Achse angebracht ist, dass die Grundplatte (50) der ersten Schließplatte (40) im Wesentlichen horizontal entweder an einem unteren Querträger (22) der Karosserie oder an dem Rahmen (10) angebracht ist, dass das erste Schloss (42A) an dem jeweils anderen Element, dem Rahmen (10) oder dem Querträger (22) angebracht ist, um den Rahmen an der Karosserie zu verriegeln, dass die zweite Schließplatte (40) im Wesentlichen horizontal an einem Teil der Klappe (30) oder des Rahmens (10) angebracht ist und dass das zweite Schloss (42B) an dem jeweils anderen Element, dem Rahmen (10) oder der Klappe (30) angebracht ist, um die Klappe bezüglich des Rahmens zu verriegeln.

9. Fahrzeug nach einem der vorhergehenden Ansprüche, **dadurch gekennzeichnet, dass** das erste Öffnungsteil eine Hecktür ist, die einen Rahmen (10) enthält, der beweglich bezüglich der Karosserie (17, 22) des Fahrzeugs angebracht ist, dass das zweite Öffnungsteil eine Klappe (30) ist, die beweglich bezüglich des Rahmens (10) angebracht ist, dass die erste Schließplatte (40) an der Karosserie (17, 22) angebracht ist, dass das erste Schloss (42A) an dem Rahmen (10) angebracht ist, um den Rahmen an der Karosserie zu verriegeln, dass die zweite Schließplatte (40) an der Klappe (30) angebracht ist und dass das zweite Schloss (42B) an dem Rahmen (10) angebracht ist, um die Klappe bezüglich des Rahmens zu verriegeln.
